(19) Europäisches Patentamt
European Patent Office
Office européen des brevets

(11) EP 3 120 202 B1

(12) EUROPÄISCHE PATENTSCHRIFT

(45) Veröffentlichungstag und Bekanntmachung des Hinweises auf die Patenterteilung:
**11.07.2018 Patentblatt 2018/28**

(51) Int Cl.:
**G05B 19/05** *(2006.01)*          **G05B 19/042** *(2006.01)*
**G06F 9/445** *(2018.01)*

(21) Anmeldenummer: **14720934.0**

(22) Anmeldetag: **22.04.2014**

(86) Internationale Anmeldenummer:
**PCT/EP2014/058114**

(87) Internationale Veröffentlichungsnummer:
**WO 2015/161865 (29.10.2015 Gazette 2015/43)**

(54) **UPDATE EINER AUTOMATISIERUNGSANLAGE IM LAUFENDEN BETRIEB**

UPDATE OF AN AUTOMATION INSTALLATION DURING RUNTIME

MISE À JOUR D'UNE INSTALLATION D'AUTOMATISME EN ETAT DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.01.2017 Patentblatt 2017/04**

(73) Patentinhaber: **Siemens Aktiengesellschaft 80333 München (DE)**

(72) Erfinder:
• **GROSCH, Thomas**
  **90574 Roßtal (DE)**
• **RICHTER, Jan**
  **91207 Lauf a. d. Pegnitz (DE)**

(56) Entgegenhaltungen:
EP-A1- 2 680 529          JP-A- 2011 176 923
US-A1- 2010 262 263      US-A1- 2012 311 556

**Beschreibung**

Die Erfindung betrifft eine Prozess-Automatisierungsanlage, in welcher eine Steuervorrichtung, beispielsweise eine speicherprogrammierbare Steuerung, mindestens eine Peripheriekomponente steuert, mittels welcher der Prozess durchgeführt wird, also beispielsweise elektrische Energie aus Kohle gewonnen wird oder Flaschen abgefüllt werden. Insbesondere betrifft die Erfindung das Festlegen eines geeigneten Zeitpunktes, um bei der Steuervorrichtung deren Betriebssoftware zu erneuern, das heißt ein Update durchzuführen, ohne dass hierzu der Prozess unterbrochen werden muss.

Im Automatisierungsumfeld werden verstärkt hochverfügbare Lösungen gefordert, die eventuell auftretende Stillstandszeiten einer Automatisierungsanlage oder kurz Anlage auf ein Minimum reduzieren. Die Entwicklung derartiger hochverfügbarer Lösungen ist sehr kostenintensiv.

Eine wichtige Funktion eines hochverfügbaren Automatisierungssystems ist das Update der Systemsoftware oder Betriebssoftware im laufenden Betrieb. Eine andere Bezeichnung für Betriebssoftware ist auch Firmware. Ein Upate kann notwendig sein, wenn Fehlerkorrekturen in der Firmware in ein laufendes System geladen werden sollen, welches dafür nicht gestoppt werden darf. Dieses sogenannte Failover während eines Updates ist für den Prozess nie gänzlich rückwirkungsfrei. Gefordert wird üblicherweise aber ein stoßfreies Failover, das heißt an den Ausgängen der Steuervorrichtung, das heißt den Eingängen der Peripheriekomponenten, darf kein Sprung im Verlauf der Steuersignale feststellbar sein, der nur durch die Unterbrechung, nicht aber durch prozesseigene Veränderungen hervorgerufen worden ist. Beispielsweise darf also nicht ein Steuersignal während des Updates plötzlich auf den Wert 0 fallen, wenn eigentlich zur Steuerung des Prozesses ein Steuersignal mit einem Wert ungleich 0 nötig ist. Die Ausgänge der Steuervorrichtung müssen sich also stetig verhalten. Toleriert wird üblicherweise eine begrenzte Zeitspanne, in welcher die Ausgänge zumindest ihren letzten Wert halten, bevor dann die Steuerung des Prozesses entweder von der wieder nach dem Update betriebsbereiten Steuervorrichtung oder von einer Backup-CPU, das heißt einer weiteren Steuervorrichtung, weitergeführt wird.

Aus der EP 2 680 529 A1 ist bereits ein Verfahren zum Festlegen eines Startzeitpunktes für ein Update einer Steuervorrichung bekannt, wobei ein aktueller Betriebszustand minestens einer Peripheriekomponente erfasst wird.

Ein Update darf nicht zur Destabilisierung des Prozesses führen. Diese Fragen beantwortet der Anwender aber heutzutage nur aufgrund der Erfahrungswerte, über seinen Prozess oder ähnlichen Prozessen. Heutzutage ist es hierzu notwendig, dass der Betreiber der Automatisierungsanlage aufgrund von Erfahrungswerten beurteilt, ob der zu steuernde Prozess die Auswirkungen eines Updates toleriert.

Der Erfindung liegt die Aufgabe zugrunde, einen geeigneten Startzeitpunkt zum Durchführen eines Updates in einer Steuervorrichtung zu ermitteln, um gefahrlos ein Update im laufenden Betrieb einer Prozess-Automatisierungsanlage durchzuführen.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Erfindungsgemäß wird ein Verfahren bereitgestellt, mittels welchem der Startzeitpunkt für das Update der Steuervorrichtung festgelegt wird. Dabei wird vorausgesetzt, dass zuvor die Steuervorrichtung in der Prozess-Automatisierungsanlage durch Erzeugen von Steuerausgaben in an sich bekannter Weise die mindestens eine Peripheriekomponente steuert. Im Zusammenhang mit der Erfindung ist unter einer Peripheriekomponente insbesondere eine Sensoreinrichtung, beispielsweise ein Temperaturfühler oder eine Lichtschranke, oder ein Aktor, beispielsweise ein Heizelement oder ein elektrischer Antrieb beispielsweise für ein Fließband, oder ein steuerbares Ventil, zu verstehen.

Es wird davon ausgegangen, dass für das Update im kürzesten Fall, also mindestens eine vorbestimmte Totzeit benötigt wird. Bei dem Verfahren wird nun ein aktueller Betriebszustand oder Zustand der mindestens einen Peripheriekomponente erfasst. Ausgehend von diesem erfassten Zustand wird dann mittels eines Regelstreckenmodells des Prozesses simuliert, welche Zustandstrajektorie, das heißt welche zeitliche Abfolge von Zuständen die mindestens eine Peripheriekomponente innerhalb der Totzeit durchlaufen würde, wenn eine vorbestimmte stationäre Steuerausgabe durch die Steuervorrichtung ausgegeben würde.

Es wird überprüft, ob die Zustandstrajektorie ausschließlich innerhalb eines Bereichs zulässiger Betriebszustände liegt. Mit anderen Worten wird überprüft, ob die Zustandstrajektorie innerhalb eines Zustandsraumes verläuft, der aus der Menge der zulässigen Betriebszustände gebildet ist, also solcher Betriebszustände, für welche der Prozess und/oder die mindestens eine Peripheriekomponente jeweils einen zulässigen Betriebswert, wie beispielsweise eine Temperatur oder Geschwindigkeit oder Kraftbeaufschlagung, aufweist. Der ermittelte aktuelle Betriebszustand setzt sich also aus Zustandsgrößen der Regelstrecke zusammen, welche durch die Steuervorrichtung zur Automatisierung des Prozesses geregelt wird.

Nur falls die Zustandstrajektorie für die Totzeit ganz innerhalb des zulässigen Bereichs liegt, wird das Update gestartet. Hierdurch ergibt sich der Vorteil, dass während der Totzeit, wenn aufgrund des Updates die Steuervorrichtung nicht mit aktualisierten Steuerausgaben auf Veränderungen im Prozess reagiert, der Prozess dennoch keinen unzulässigen Betriebszustand einnimmt.

Falls die Zustandstrajektorie ein gefahrloses Failover indiziert, wird gemäß einer Weiterbildung der Erfindung zum Starten des Updates die stationäre Steuerausgabe dann tatsächlich an die mindestens eine Peripheriekomponente ausgegeben und währenddessen bei unterbrechungsfreiem Betrieb der Prozess-Automatisierungsanlage die Steuervorrichtung abgekoppelt und das Update eingeleitet. Hierdurch ergibt sich der Vorteil, dass der Prozess weiterläuft. Durch das Abkoppeln während des Updates werden durch die Steuervorrichtung auch keine fehlerhaften, durch den Updatevorgang verursachten Steuerausgaben an die mindestens eine Peripheriekomponente ausgegeben.

Gemäß einer bevorzugten Ausführungsform wird nach dem Starten des Updates und innerhalb der Totzeit ein Übernahmesignal an eine weitere Steuervorrichtung der Automatisierungsanlage ausgesendet, damit diese weitere Steuerausgaben an die mindestens eine Peripheriekomponente ausgibt, sie also den Prozess weiter regelt. Hierdurch ergibt sich der Vorteil, dass das Update selbst länger als die Totzeit dauern kann, ohne dass der Prozess unterbrochen werden muss.

Gemäß der Erfindung ist das Regelstreckenmodell ein Modell einer die mindestens eine Peripheriekomponente umfassenden Regelstrecke auf. Hierdurch ergibt sich der Vorteil, dass auf ein in der Regel für eine Automatisierungsanlage bereits vorhandenes Modell zurückgegriffen werden kann. Beispielsweise kann ein Modell einer Regelstrecke für einen Regelbetrieb auf Grundlage eines Beobachters, beispielsweise eines Luenberger-Beobachters, vorhanden sein, das auch zum Ermitteln der Zustandstrajektorie genutzt werden kann. Die Simulation kann beispielsweise im Lösen einer Differentialgleichung bestehen, welche sich durch das Regelstreckenmodell als Beschreibung des dynamischen Verhaltens der Regelstrecke ergibt.

Zusätzliche Sicherheit ergibt sich, wenn nicht ausschließlich für die Totzeit überprüft wird, ob ein sicherer Betriebszustand vorliegt, sondern zum Überprüfen der Zustandstrajektorie mittels der Simulation ein Zeitpunkt ermittelt wird, zu welchem die Zustandstrajektorie erstmals einen unzulässigen Betriebszustand umfasst. Hieraus wird ein maximal zulässiger Zeithorizont ermittelt. Dann wird überprüft, ob die Totzeit kleiner als der Zeithorizont oder, was noch sicherer ist, kleiner als der Zeithorizont minus einer vorbestimmten Pufferzeit ist.

Bisher wurde nur der Fall beschrieben, dass durch die Simulation ermittelt wird, dass die Zustandstrajektorie innerhalb der Totzeit stets im Bereich zulässiger Betriebszustände liegt. Für den Fall, dass keine zulässige Zustandstrajektorie vorliegt, wird das Update bevorzugt verzögert.

Hierbei ergibt sich ein weiterer Vorteil, wenn nicht gleich für die erstbeste Zustandstrajektorie die Verzögerung ausgelöst wird, sondern in dem Fall, dass die Zustandstrajektorie innerhalb der Totzeit zumindest teilweise außerhalb des Bereichs zulässiger Betriebszustände liegt, zunächst für mindestens eine weitere vorbestimmte stationäre Steuerausgabe jeweils eine weitere Zustandstrajektorie ermittelt wird. Mit anderen Worten wird überprüft, ob es zum aktuellen Zeitpunkt eine geeignete Steuerausgabe gibt, die das Durchführen des Updates zulässt. Erst, wenn die Überprüfung aller vorbestimmten stationären Steuerausgaben ein negatives Ergebnis liefert, wird dann das Update verzögert.

Gemäß einer anderen vorteilhaften Weiterbildung wird eine vorbestimmte Sicherungssteuerausgabe bereitgestellt, welche die mindestens eine Peripheriekomponente in einen vorbestimmten sicheren Zustand steuert. Dieser sichere Zustand kann auch dahingehend ausgestaltet sein, dass der Prozess unterbrochen oder beendet wird. Diese Sicherungssteuerausgabe wird an die mindestens eine Peripheriekomponente für den Fall ausgegeben, dass nach dem Start des Updates ein Fehlerzustand bei der Steuervorrichtung und/oder der mindestens einen Peripheriekomponente erkannt und signalisiert wird. Hierdurch ergibt sich der Vorteil, dass die während der Totzeit ungeregelt weiterlaufende Automatisierungsanlage bei Auftreten eines Fehlers nicht beschädigt wird.

Wie bereits ausgeführt, ist es notwendig, dass das Abkoppeln der Steuervorrichtung und das erneute Wiederankoppeln an die mindestens eine Peripheriekomponente stoßfrei verläuft, das heißt ein stoßfreier Failover sicher gewährleistet ist. Hierzu wird gemäß einer Ausführungsform des Verfahrens nach dem Update die Steuervorrichtung wieder an die mindestens eine Peripheriekomponente angekoppelt und als erste Steuerausgabe nach den Ankoppeln durch die Steuervorrichtung Wiederanlaufwerte ausgegeben, welche entweder der stationären Steuerausgabe entsprechen oder anhand der Zustandstrajektorie ermittelt werden. Im letzteren Fall wird anhand der Zustandstrajektorie insbesondere ermittelt, in welchem Zustand sich gemäß der Simulation der Prozess am Ende des Updates befinden müsste, sodass für diesen Zustand eine geeignete Steuerausgabe ermittelt und an die mindestens eine Peripheriekomponente ausgegeben werden kann.

Gemäß einer alternativen Ausführungsform wird nach dem Update die Steuervorrichtung wieder an die mindestens eine Peripheriekomponente angekoppelt und es werden als erste Steuerausgabe nach dem Ankoppeln durch die Steuervorrichtung solche Wiederanlaufwerte ausgegeben, welche durch Synchronisieren mit einer weiteren Steuervorrichtung ermittelt werden, die während des Updates mit der mindestens einen Peripheriekomponente gekoppelt war. Hierdurch ergibt sich der zusätzliche Vorteil, dass während des Updates der Prozess weiter aktiv geregelt werden kann, das heißt auch eine Veränderung des Prozesszustands durch die weitere Steuervorrichtung aktiv eingeregelt werden kann und dann die durch das Update veränderte Steuervorrichtung stoßfrei in den veränderten Prozessablauf eingreifen kann.

Wie bereits ausgeführt, gehört zu der Erfindung, auch eine Steuervorrichtung, die dazu ausgelegt ist, eine Ausführungsform des erfindungsgemäßen Verfahrens durchzuführen. Bevorzugt ist die erfindungsgemäße Steuervorrichtung als speicherprogrammierbare Steuerung (SPS) ausgestaltet.

Schließlich gehört zu der Erfindung auch eine Prozess-Automatisierungsanlage mit mindestens einer Peripheriekomponente, die zum Durchführen des Prozesses ausgelegt ist, also beispielsweise zum Erzeugen von elektrischer Energie aus Kohle oder auf der Grundlage eines Kernspaltungsprozesses, zum Abfüllen von Behältnissen, zum Fertigen von Produktgütern, beispielsweise Gießen von Metallgegenständen, oder zum Regeln einer Temperatur z.B. in einem Gebäude.

Die erfindungsgemäße Automatisierungsanlage weist eine Ausführungsform der erfindungsgemäßen Steuervorrichtung auf. Die erfindungsgemäße Automatisierungsanlage weist den Vorteil auf, dass die Steuervorrichtung mit einer aktualisierten Betriebssoftware versehen werden kann, ohne dass hierzu der Prozess unterbrochen werden muss.

Gemäß einer Weiterbildung der erfindungsgemäßen Automatisierungsanlage weist diese zusätzlich zu der Steuervorrichtung mindestens eine weitere Steuervorrichtung auf, die bevorzugt ebenfalls eine Ausführungsform der erfindungsgemäßen Steuervorrichtung ist, wobei alle Steuervorrichtungen zum Synchronisieren von Reglerzuständen über eine Synchronisationsverbindung gekoppelt sind. Hierdurch ergibt sich der Vorteil, dass ein hochverfügbares, redundantes Regelungssystem für die Automatisierungsanlage bereitgestellt ist, bei welchem die Regelung des Prozesses abwechseln von jeweils einer der Steuervorrichtungen durchgeführt werden kann und bei einem Wechsel zwischen den Steuervorrichtungen keine Sprünge oder Stöße im Verlauf der an die mindestens eine Peripheriekomponente ausgegebenen Steuerausgaben entstehen.

Im Folgenden ist ein Ausführungsbeispiel der Erfindung beschrieben. Hierzu zeigt:

FIG 1    eine schematische Darstellung einer Ausführungsform der erfindungsgemäßen Prozess-Automatisierungsanlage,

FIG 2    ein Signalflussdiagramm zu einer Regelung, wie sie durch eine Steuervorrichtung der Automatisierungs-anlage von FIG 1 durchgeführt werden kann,

FIG 3    ein Signalflussdiagramm zu der Regelungsstrecke, wie sie während eines Updates der Steuervorrichtung vorliegt, und

FIG 4    ein Flussschaubild zur Veranschaulichung einer Ausführungsform des erfindungsgemäßen Verfahrens, wie es durch die Steuervorrichtung durchgeführt werden kann.

Bei dem im Folgenden erläuterten Ausführungsbeispiel handelt es sich um eine bevorzugte Ausführungsform der Erfindung. Die beschriebene Ausführungsform ist auch durch weitere der bereits beschriebenen Merkmale der Erfindung ergänzbar.

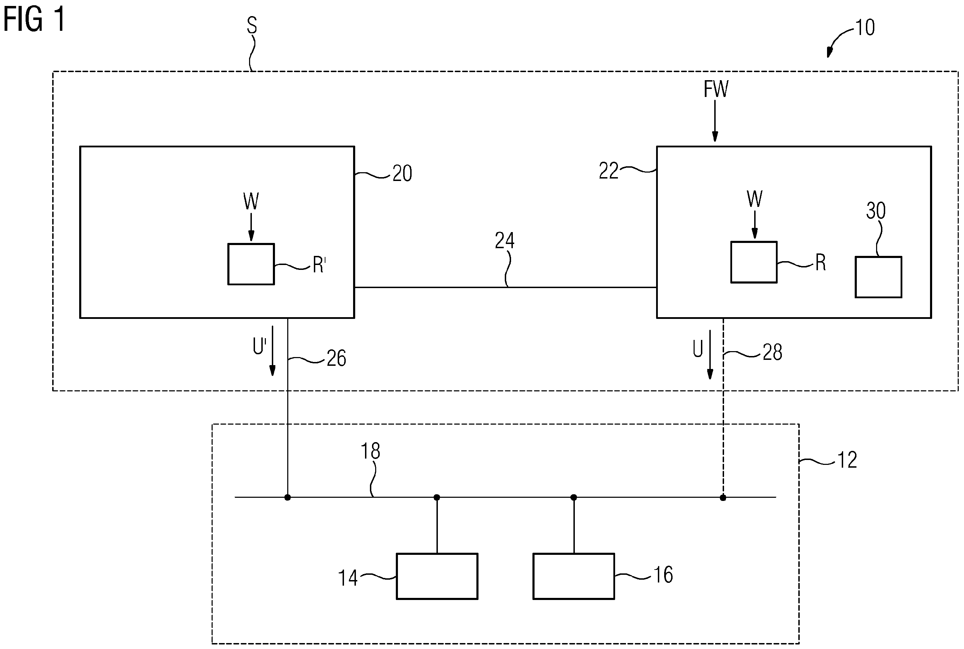

FIG 1 zeigt eine Prozess-Automatisierungsanlage oder Automatisierungsanlage oder kurz Anlage 10. Bei der Anlage 10 kann es sich beispielsweise um ein Kraftwerk, wie beispielsweise ein Kohlekraftwerk oder ein Kernkraftwerk, um ein Fernwärmewerk, um eine Flaschenabfüllanlage oder um eine Heizungsanlage.

In der Anlage 10 wird automatisiert ein Prozess 12 geregelt, also beispielsweise im Falle eines Kernkraftwerks die Gewinnung von elektrischer Energie aus einem Kernspaltvorgang. Der Prozess 12 kann hierzu durch Peripheriekomponenten 14, 16 und weitere (nicht dargestellte) Peripheriekomponenten überwacht und gesteuert werden. Beispielsweise kann die Peripheriekomponente 14 ein Sensor und die Peripheriekomponente 16 ein Aktor sein. Die Peripheriekomponenten 14, 16 können über ein Kommunikationsnetzwerk 18 mit Steuervorrichtungen 20, 22 gekoppelt sein. Es kann auch nur eine Steuervorrichtung vorgesehen sein oder es können auch mehr als die dargestellten zwei Steuervorrichtungen 20, 22 vorgesehen sein. Jede Steuervorrichtung 20, 22 kann jeweils beispielsweise als SPS oder als Computer mit eigenem Betriebssystem ausgestaltet sein.

Die Steuervorrichtungen 20, 22 können über eine Synchronisationsverbindung 24 zum Austauschen von Synchronisationsdaten gekoppelt sein. Die in FIG 1 dargestellte Synchronisationsverbindung 24 ist nur eine symbolische Darstellung. Die Synchronisationsdaten können auch beispielsweise über das Kommunikationsnetzwerk 18 ausgetauscht werden.

Die Steuervorrichtungen 20, 22 stellen eine hochverfügbare Anlagensteuerung S dar, wobei zu einem gegebenen Zeitpunkt jeweils nur eine Steuervorrichtung 20, 22 Steuerwerte, die zusammenfassend hier als Steuerausgabe U, U' bezeichnet sind, über eine aktive Steuerverbindung 26 und über das Kommunikationsnetzwerk 18 an die Peripheriekomponenten 14, 16 überträgt. Die währenddessen inaktive Steuervorrichtung, hier die Steuervorrichtung 22, ist von dem Prozess 12 abgekoppelt, was in FIG 1 durch eine gestrichelte Steuerverbindung 28 dargestellt ist. Jede Steuerausgabe U, U' kann beispielsweise als ein Vektor aus einzelnen Steuerwerten für die Peripheriekomponenten 14, 16 für eine jeweiligen Regelzyklus gebildet sein.

Das hochverfügbare Anlagensteuerung S zeichnet sich also durch die folgenden grundlegenden Merkmale aus. Zwei oder mehrere Steuerungssysteme, hier die Steuervorrichtungen 20, 22, sind über die Synchronisationsverbindung 24 miteinander gekoppelt. Die an das System angeschlossenen Peripheriekomponenten 14, 16 können prinzipiell von beiden Systemen bedient werden, das heißt über jeweilige Regler R, R' derart eingeregelt werden, dass eine Sollwertvorgabe W im Prozess 12 eingestellt wird. Eines der beiden Teilsysteme ist bezüglich der an das Steuerungssystem S angeschlossenen Peripheriekomponenten 14, 16 führend, im in FIG 1 gezeigten Fall die Steuervorrichtung 20. Dies bedeutet, dass Steuerausgaben U, U' nur von einem der Teilsysteme durchgeführt werden.

Damit beide Teilsysteme, also die Steuerungsvorrichtungen 20, 22, synchron ablaufen können, können sie über die Synchronisationsverbindung 24 in vorgegebenen Zeitabständen synchronisiert werden. Bezüglich der Häufigkeit der Synchronisation und deren Umfang können verschiedene Ausprägungen vorgenommen werden, was die Totzeit beim Umschalten zwischen den Steuervorrichtungen beeinflusst. Um bei der Umschaltung im Fehlerfall das fehlerbehaftete System eindeutig zu identifizieren, kann eine entsprechende Systemdiagnose vorgesehen sein, wie an sich aus dem Stand der Technik bekannt ist.

In dem gezeigten Beispiel ist davon ausgegangen, dass die Regelung des Prozesses 12 zunächst von der Steuervorrichtung 22 durchgeführt worden war und dann ein Update einer Betriebssoftware oder Firmware der Steuervorrichtung 22 nötig wurde, das heißt die Betriebssoftware der Steuervorrichtung 22 durch eine neue Firmware FW ersetzt werden sollte. Hierzu wurde die Steuervorrichtung 22 vom Prozess 12 abgekoppelt und die Regelung des Prozesses 12 durch die Steuervorrichtung 20 übernommen. Dieser Wechsel bei der Regelung des Prozesses 12 zwischen der Steuervorrichtung 22 zur Steuervorrichtung 20 erfolgte dabei stoßfrei, das heißt der Prozess 12 wurde ohne Unterbrechung fortgesetzt, und es kam auch zu keiner oder nur einer unwesentlichen Veränderung im Prozessablauf 12. Bei der abgekoppelten Steuervorrichtung 22 kann nun die Firmware FW eingespielt werden, während der Prozess 12 weiter betrieben wird. Nach dem Update kann die Steuervorrichtung 22 genauso stoßfrei wieder die Regelung von der Steuervorrichtung 20 übernehmen.

Für den stoßfreien Übergang der Regelung zur Steuervorrichtung 20 führt die Steuervorrichtung 22 ein Verfahren zur Abschätzung der Auswirkungen auf den Prozess auf Basis eines Regelsteckenmodells 30 durch. Diese Abschätzung vermindert das Risiko einer Fehleinschätzung beim Festlegen eines Startzeitpunktes für das Update.

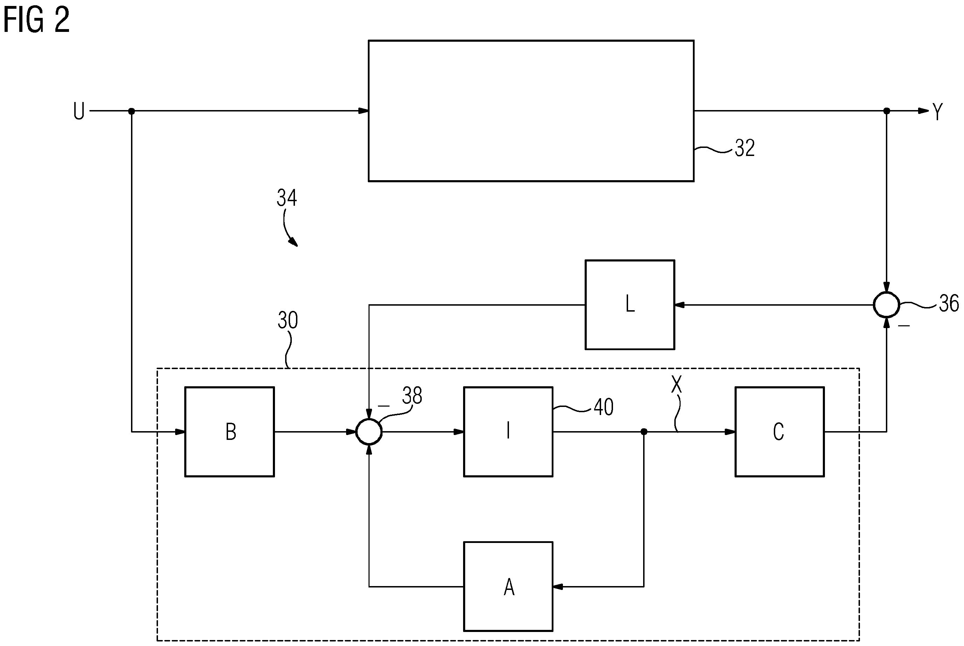

Das Regelsteckenmodell oder Modell 30 kann beispielsweise, wie in FIG 2 veranschaulicht, das Modell 30 einer Regelstrecke 32 sein, wie sie durch den Prozess 12 gegeben ist. Mittels des Modells 30 kann die Auswirkung einer Totzeit simuliert oder vorausgesagt werden, wie sie sich zwischen dem Zeitpunkt des Abkoppelns der Steuervorrichtung 22 und dem Ankoppeln der Steuervorrichtung 20 ergibt.

Das Modell 30 konnte ohne zusätzlichen Aufwand aus der regelungstechnischen Anwendung, das heißt den Engineeringdaten für die Anlage 10, entnommen werden. Beim Engineering der Anlage 10 zum Konfigurieren oder Auslegen der Regelung des Prozesses 12 durch jeweils eine der Steuervorrichtungen 20, 22 kann es sein, dass manche Zustandsgrößen des Prozesses 12, also beispielsweise Temperaturen oder andere physikalische Größen, indirekt ermittelt werden müssen, weil sie nicht direkt oder nur mit einem unerwünscht großen Aufwand gemessen werden können und deshalb geschätzt werden müssen. Hierzu kann beispielsweise eine Beobachtermethode, wie beispielsweise ein Luenberger-Beobachter 34, genutzt werden. Der in FIG 2 beispielhaft dargestellte Beobachter 34 bildet die Auswirkungen der Steuerausgabe U der Steuervorrichtung 30 auf die Regelstrecke 32, das heißt den Prozesszustand des Prozesses 12, nach, um hierdurch interne Zustandsgrößen der Regelstrecke 32 zu ermitteln. Die in FIG 2 dargestellten Matrizen A, B und C beschreiben dabei in an sich bekannter Weise das dynamische Verhalten der Regelstrecke 32 bei Beaufschlagung mit der Steuerausgabe U, die sich über der Zeit ändert. Die Matrix L ist eine Korrekturmatrix zum Ausgleichen eines Beobachtungsfehlers, der am Subtraktionspunkt 36 ermittelt wird. Ausgehend von einem Subtraktionspunkt 38 wird mittels eines Integrators 40 ein Folgezustand, das heißt ein für einen nächsten Beobachtungszeitpunkt geschätzter Zustandsvektor ermittelt.

Die Folge der so für mehrere zukünftige Zeitpunkte ermittelten Zustandsvektoren ergibt eine Zustandstrajektorie.

Das Modell 30 kann nun auch genutzt werden, um das Verhalten der Regelstrecke 32 im Umschaltfall, das heißt während der Totzeit T, zu berechnen.

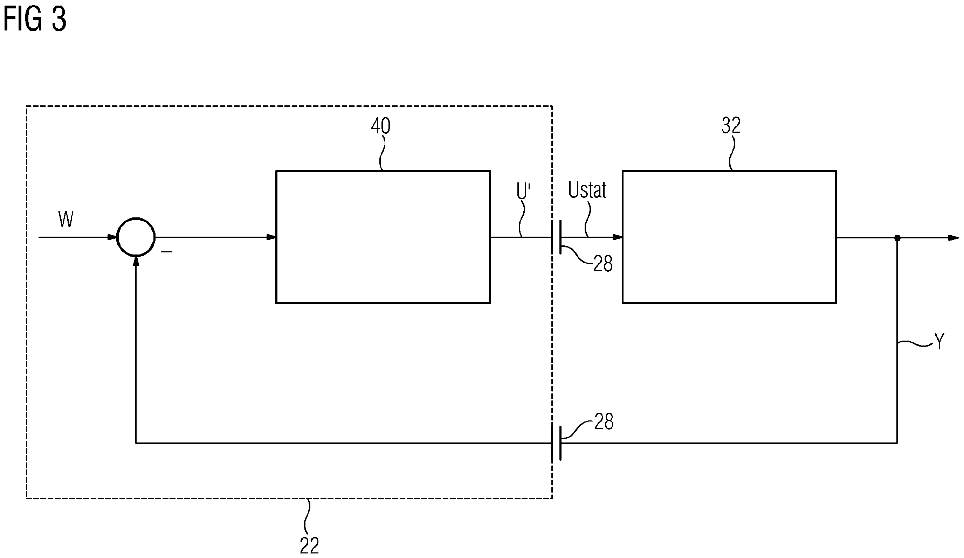

Der Umschaltfall ist dadurch gekennzeichnet, dass sowohl die Eingangsdaten Y, wie sie an der Regelstrecke 32 beobachtet werden können, als auch die Ausgangsdaten U der Steuervorrichtung 22, während diese abgekoppelt ist, für die Zeitspanne der Totzeit nicht aktualisiert werden können, das heißt zwischen der Steuervorrichtung 22 und dem Prozess 12 ausgetauscht werden können. Während dieser Zeitspanne oder Totzeit ist die Regelstrecke 32 vom Regler 40 der Steuervorrichtung 22 getrennt, durch welchen eine Sollwertvorgabe W im Prozess 12 eingeregelt werden soll. Wie in FIG 3 veranschaulicht, ist also die Regelstrecke 32 nicht durch die Steuervorrichtung 22 beeinflussbar. Der durch die Steuervorrichtung 22 und die Regelstrecke 32 gebildete Regelkreis ist also aufgetrennt, das heißt es ergibt sich eine offene Kette.

Der Regler R kann während der Totzeit weder neue Eingangssignale Y vom Prozess 12 lesen noch die Ausgaben U zum Prozess 12 hin aktualisieren.

Daher ist das Kommunikationsnetzwerk 18 dahingehend ausgelegt, dass die Peripherie-Ausgabe während der Totzeit ihren letzten Wert beibehält, das heißt die Regelstrecke 32 empfängt eine stationäre Steuerungsausgabe Ustat. Ein entsprechendes Kommunikationsnetzwerk 18 kann beispielsweise auf der Grundlage eines Profibus-Netzwerks gebildet werden, in welchem nicht paketorientierte, sondern Zeitschlitz-orientierte Übertragungen von Steuerdaten erfolgt. Durch Beibehalten der Werte für die einzelnen Zeitschlitze, das heißt nicht Überschreiben oder Löschen der vormals übertragenen Werte, kann die stationäre Steuerausgabe Ustat erzeugt werden. Dann bleibt die Regelstrecke 32 während der Totzeit mit dem letzten Eingangsvektor beaufschlagt, also der stationären Steuerausgabe Ustat. Dies führt zu einer Zustandstrajektorie der Zustandsgrößen der Regelstrecke 32, die unabhängig von der Steuerausgabe U der Steuervorrichtung 22 während der Totzeit ist. Abhängig von den Streckenparametern ändern sich die Zustandsgrößen der Regelstrecke, beispielsweise eine Kesseltemperatur, derart, dass sie einen für den Prozess kritischen Wert erreichen kann. In einem solchen Fall wäre die Failover-Totzeit des verwendeten Steuerungssystems aus den Steuervorrichtungen 20, 22 zu groß für den zu steuernden Prozess 12. Die zu erwartende Totzeit ist aber eine bekannte Kenngröße der eingesetzten Anlagensteuerung S. Ist die zu erwartende Totzeit aber bekannt, so kann geprüft werden, ob bestimmte Zustandsgrößen während der Totzeit einen kritischen Wert überhaupt erreichen können beziehungsweise mit welcher stationären Steuerausgabe Ustat der Prozess 12 während der Totzeit beaufschlagt werden muss, um das Firmware-Update gefahrlos durchführen zu können.

Hierbei können ohne signifikante Einschränkung der Funktionstüchtigkeit folgende Annahmen getroffen werden. Es existiert eine sichere Belegung für die Steuerausgabe, das heißt eine Sicherungssteuerausgabe, das heißt für den Fall, dass der Zeitraum für einen sicheren Betrieb in der offenen Kette überschritten wird, kann durch ein (nicht dargestelltes) Sicherungssystem die Sicherungssteuerausgabe über das Kommunikationsnetzwerk 18 an die Peripheriegeräte 14, 16 ausgegeben werden. Diese Maßnahme beendet allerdings den nützlichen Betrieb und ist daher zu vermeiden. Die Betriebssoftware auf den Steuervorrichtungen 20, 22 unterstützt den stoßfreien Wiederanlauf, das heißt es sind entsprechende Steuerausgabewerte gezielt einstellbar, sodass nach einem Wieder-Ankoppeln der Steuervorrichtung 22 an das Kommunikationsnetzwerk 18 unabhängig vom aktuellen Reglerzustand des Reglers R ein vorgebbarer Vektor einer Steuerausgabe mit Wiederanlaufwerten ausgegeben werden kann.

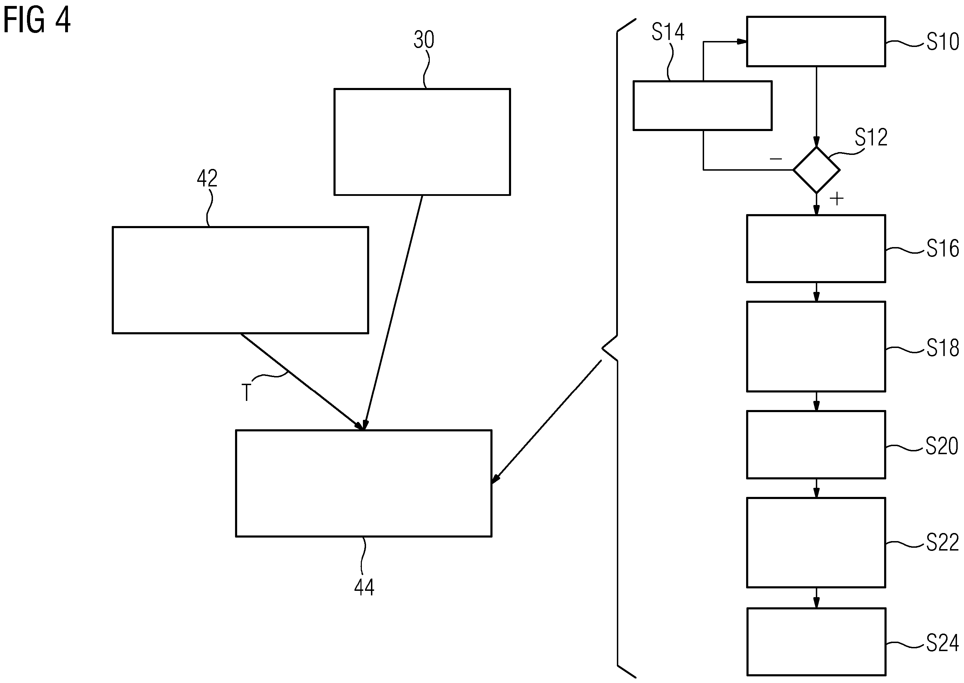

Anhand von FIG 4 ist im Folgenden beschrieben, wie die Steuervorrichtung 22 für das Firmware-Update zunächst von dem Prozess 12 zu einem sicheren Startzeitpunkt für das Update von dem Prozess 12 abgekoppelt wird und anschließend nach erfolgreichem Update wieder mit dem Prozess 12 gekoppelt wird, damit die Steuervorrichtung 22 anstelle der Steuervorrichtung 20 die Regelung des Prozesses 12 weiterführt.

Ausgegangen wird von einer Beschreibung einer Menge V verbotener Zustände beispielsweise als Polytope oder Polyeder. Das Modell 30 des geregelten Prozesses 12 kann beispielsweise ein lineares oder nicht-lineares Modell sein, wobei ein nicht-lineares Modell die folgende allgemeine Form aufweisen kann:

$$d(X(t))/dt = f(X(t),U(t),D(t)), \; X(t0)=X0$$

Bei der Formel ist der Operator d()/dt die mathematische Ableitung nach der Zeit, X der Zustandsvektor, das heißt der Betriebszustand, der Regelstrecke 32, U die Steuerausgabe, D ein die Störeinflüsse beschreibender Vektor und X0 eine Initialbedingung, das heißt ein Betriebszustand zu einem vorgegebenen Zeitpunkt 0, beispielsweise dem aktuellen Zeitpunkt. Die Funktion f() beschreibt den funktionalen Zusammenhang.

In FIG 4 ist gezeigt, wie auf der Grundlage des Modells 30 und eines Topologiemodells 42 der Anlage 10 eine Erreichbarkeitsanalyse 44 durchgeführt wird, welche ausgehend von dem initialen Betriebszustand X0 eine Zustandstrajektorie simuliert werden kann. Auf der Grundlage des Topologiemodells 42 kann beispielsweise die Totzeit T ermittelt werden.

In einem Schritt S10 wird durch Inbetriebnahme des Zustandsbeobachters (34), beispielsweise nach Luenberger, auf Basis des Modells 30 fortlaufend der Zustand X der Regelstrecke 32 geschätzt. Es wird der gewünschte Arbeitspunkt, wie er durch die Sollwertvorgaben W vorgegeben ist, angefahren und der Prozess 12 auf den Arbeitspunkt eingeregelt. Dann wird eine Beruhigung der Prozesswerte abgewartet, das heißt eventuelle Einschwingvorgänge können abklingen. Es ergeben sich somit stationäre Betriebsverhältnisse, sodass gilt: U' = Ustat und X = X0. Zu diesem aktuellen Zustand t1 wird mittels der Erreichbarkeitsanalyse 44 auf Basis des Modells 30, der Anfangsbedingung, das heißt dem initialen Betriebszustand X0, und unter Annahme einer konstanten Steuerungsausgabe Ustat, für zukünftige Zeitpunkte t der Vektor mit den Betriebszustandswerten, das heißt der Betriebszustand X, vorausberechnet oder simuliert, wozu dann die obige Formel abgewandelt wird:

$$d(X(t))/dt = f(X(t),Ustat,D(t)), \; X(t0)=X0$$

Die Störeinflüsse D können hierbei geschätzt oder ebenfalls konstant gehalten werden. Durch Lösen der Differenzialgleichung ergibt sich als Ergebnis der Erreichbarkeitsanalyse für die zukünftigen Zeitpunkte t eine Menge E(t) der erreichbaren Betriebszustände.

Es wird dann der erste Zeitpunkt tv ermittelt, zu dem der Schnitt E(tv) mit der Menge V der verbotenen Zustände nicht leer ist, das heißt der Prozess 12 einen unzulässigen Betriebszustand eingenommen hat. Jeder der vorangehenden Zeitpunkte t < tv, zu dem E(t) geschnitten mit V leer ist, bestimmt einen zulässigen Zeithorizont tvo für den sicheren Betrieb. Dieser Zeithorizont tvo kann aus Sicherheitsgründen konservativ weiter um eine Pufferzeit verkürzt werden.

In einem Schritt S12 kann überprüft werden, ob der Zeitraum [t0, t0+tvo] für die gewünschte Maßnahme, das heißt das Firmware-Update, ausreicht. Falls dies nicht der Fall ist, was in FIG 4 durch ein Minuszeichen symbolisiert ist, kann eine bestimmte Wartezeit abgewartet werden, also das Update verschoben werden, bevor erneut eine Erreichbarkeitsanalyse für einen späteren Zeitpunkt t1 durchgeführt wird. Der Prozess 12 wird hierbei nicht unterbrochen.

Falls der genannte Zeitraum größer als die Zeit T ist, wird in einem Schritt S16 weiter verfahren. Im Schritt S16 wird die stationäre Steuerausgabe Ustat am Kommunikationsnetzwerk 18 angelegt und eine Quittierung durch die Peripheriekomponenten 14, 16 abgewartet. Danach kann die Steuervorrichtung 22 vom Prozess 12 abgekoppelt werden und das Update durchgeführt werden. Hierbei kann auch ein Übernahmesignal an die Steuervorrichtung 20 übermittelt werden, sodass diese die Regelung des Prozesses 12 übernimmt, sodass das Firmware-Update beliebig lang fortgeführt werden kann. Nachdem die Steuervorrichtung 22 wieder für die Regelung bereitsteht, kann sie gestartet werden und beispielsweise über die Synchronisationsverbindung 24 mit der Steuervorrichtung 20 synchronisiert werden, sodass nun die Steuervorrichtung 22 wieder für die Regelung bereitsteht. Als erste Steuerausgabe U können Wiederanlaufwerte verwendet werden, die beispielsweise aus der Synchronisation ermittelt werden können oder mit der stationären Steuerausgabe Ustat übereinstimmen können oder anhand der Zustandstrajektorie ermittelt werden können, sodass ein stoßfreies Aufschalten der Steuervorrichtung 22 auf den Prozess 12 gesichert ist.

Es wird empfohlen, die Erreichbarkeitsanalyse derart schnell durchzuführen, dass sich der Prozess 12 ausgehend vom aktuellen Zeitpunkt t0, an welchem die Erreichbarkeitsanalyse ausgehend vom initialen Betriebszustand X0 durchgeführt wird, nicht zu weit vom Betriebszustand X0 entfernt.

Bei dem gezeigten Beispiel wird also ein bereits vorhandenes, für regelungstechnische Zwecke benutztes Regelstreckenmodell, das heißt das Modells 30, zusätzlich zur Unterstützung des Anwenders bei der Auswahl einer hochverfügbaren Automatisierungslösung genutzt.

Insgesamt ergibt sich somit durch das Beispiel ein modellbasiertes Assistenzsystem zur Planung und Durchführung eines Software-Updates in einem hochverfügbaren Automatisierungssystem.

Bezugszeichenliste

| | |
|---|---|
| 10 | Anlage |
| 12 | Prozess |
| 14, 16 | Peripheriekomponente |
| 18 | Kommunikationsnetzwerk |
| 20, 22 | Steuervorrichtung |
| 24 | Synchronisationsverbindung |
| 26 | Steuerverbindung |
| 28 | unterbrochene Steuerverbindung |
| 30 | Regelstreckenmodell |
| 32 | Regelstrecke |
| 34 | Beobachter |
| 36, 38 | Subtraktionspunkt |
| 40 | Integrator |
| 42 | Topologiemodell |
| 44 | Erreichbarkeitsanalyse |
| U, U' | Steuerausgabe |
| $U_{stat}$ | stationäre Steuerausgabe |
| X | Betriebszustand |
| Y | Ausgabewerte des Prozesses 12 |
| W | Sollwertvorgabe |
| FW | Firmware |
| R, R' | Regler |
| S10 bis S24 | Verfahrensschritte |
| S | Anlagensteuerung |
| T | Totzeit |

**Patentansprüche**

1. Verfahren zum Festlegen eines Startzeitpunkts für ein Update einer Steuervorrichtung (22), die in einer Prozess-Automatisierungsanlage (10) durch Erzeugen von Steuerausgaben (U') mindestens eine Peripheriekomponente (14, 16) steuert, wobei für das Update mindestens eine vorbestimmte Totzeit (T) benötigt wird und wobei bei dem Verfahren ein aktueller Betriebszustand der mindestens einen Peripheriekomponente (14, 16) erfasst wird, **dadurch gekennzeichnet, dass** ausgehend von dem erfassten Betriebszustand mittels eines Regelstreckenmodells (30) des Prozesses (12) simuliert wird, welche Zustandstrajektorie die mindestens eine Peripheriekomponente (14, 16) innerhalb der Totzeit (T) bei einer vorbestimmten stationären Steuerausgabe (Ustat) durchläuft, und überprüft wird (S12), ob die Zustandstrajektorie ausschließlich innerhalb eines Bereichs zulässiger Betriebszustände (X) liegt, und gegebenenfalls das Update gestartet wird.

2. Verfahren nach Anspruch 1, wobei zum Starten des Updates die stationäre Steuerausgabe (Ustat) an die mindestens eine Peripheriekomponente (14, 16) ausgegeben wird (S18) und währenddessen bei unterbrechungsfreiem Betrieb des Prozesses (12) die Steuervorrichtung (22) abgekoppelt und das Update eingeleitet wird (S20).

3. Verfahren nach einem der vorhergehenden Ansprüche, wobei nach dem Starten des Updates und innerhalb der Totzeit (T) ein Übernahmesignal zum Ausgeben weiterer Steuerausgaben (U) an eine weitere Steuervorrichtung (20) ausgesendet wird.

4. Verfahren nach einem der vorhergehenden Ansprüche, wobei das Regelstreckenmodell (30) ein Modell einer die mindestens eine Peripheriekomponente (14, 16) umfassenden Regelstrecke (32) aufweist.

5. Verfahren nach einem der vorhergehenden Ansprüche, wobei zum Überprüfen der Zustandstrajektorie mittels der Simulation (44) ein Zeitpunkt ermittelt wird, zu welchem die Zustandstrajektorie erstmals einen unzulässigen Betriebszustand umfasst, und hieraus ein maximal zulässiger Zeithorizont ermittelt wird und überprüft wird, ob die Totzeit (T) kleiner als der Zeithorizont oder kleiner als der Zeithorizont minus einer vorbestimmten Pufferzeit ist.

6. Verfahren nach einem der vorhergehenden Ansprüche, wobei in dem Fall, dass die Zustandstrajektorie innerhalb der Totzeit (T) zumindest teilweise außerhalb des Bereichs zulässiger Betriebszustände liegt, für zumindest eine weitere vorbestimmte stationäre Steuerausgabe jeweils eine weitere Zustandstrajektorie ermittelt wird.

7. Verfahren nach einem der vorhergehenden Ansprüche, wobei in dem Fall, dass keine zulässige Zustandstrajektorie vorliegt, das Update verzögert wird.

8. Verfahren nach einem der vorhergehenden Ansprüche, wobei eine vorbestimmte Sicherungssteuerausgabe bereitgestellt wird, welche die mindestens eine Peripheriekomponente (14, 16) in einen vorbestimmten sicheren Betriebszustand steuert, und die Sicherungssteuerausgabe an die mindestens eine Peripheriekomponente (14, 16) ausgegeben wird, falls nach dem Start des Updates ein Fehlerzustand bei der Steuervorrichtung (20, 22) und/oder der mindestens einen Peripheriekomponente (14, 16) signalisiert wird.

9. Verfahren nach einem der vorhergehenden Ansprüche, wobei nach dem Update die Steuervorrichtung (22) wieder an die mindestens einen Peripheriekomponente (14, 16) angekoppelt wird und als erste Steuerausgabe nach dem Ankoppeln durch die Steuervorrichtung (22) Wiederanlaufwerte ausgegeben werden (S22), welche a) der stationären Steuerausgabe (Ustat) entsprechen oder

   b) anhand der Zustandstrajektorie ermittelt werden.

10. Verfahren nach einem der Ansprüche 1 bis 8, wobei nach dem Update die Steuervorrichtung (22) wieder an die mindestens einen Peripheriekomponente (14, 16) angekoppelt wird und als erste Steuerausgabe (U') nach dem Ankoppeln durch die Steuervorrichtung (22) Wiederanlaufwerte ausgegeben werden (S22), welche durch Synchronisieren mit einer weiteren Steuervorrichtung (20) ermittelt werden, die während des Updates mit der mindestens einen Peripheriekomponente (14, 16) gekoppelt war.

11. Steuervorrichtung (20, 22) für eine Prozess-Automatisierungsanlage, wobei die Steuervorrichtung (20, 22) dazu ausgelegt ist, ein Verfahren nach einem der vorhergehenden Ansprüche durchzuführen.

**12.** Steuervorrichtung (20, 22) nach Anspruch 11, die als speicherprogrammierbare Steuerung, SPS, ausgestaltet ist.

**13.** Prozess-Automatisierungsanlage (10) mit mindestens einer Peripheriekomponente (14, 16) zum Durchführen eines Prozesses (12) und mit einer Steuervorrichtung (22) nach Anspruch 11 oder 12.

**14.** Prozess-Automatisierungsanlage (10) nach Anspruch 13, wobei die Automatisierungsanlage (10) zusätzlich zu der Steuervorrichtung (22) mindestens eine weitere Steuervorrichtung (20) aufweist, wobei alle Steuervorrichtungen (20, 22) zum Synchronisieren von Reglerzuständen über eine Synchronisationsverbindung (24) gekoppelt sind.

**Claims**

**1.** Method for stipulating a starting time for an update for a control apparatus (22) which controls at least one peripheral component (14, 16) in a process automation installation (10) by producing control outputs (U'), wherein at least a predetermined downtime (T) is required for the update, and wherein, in the method, a current operating state of the at least one peripheral component (14, 16) is detected, **characterized in that** the detected operating state is used as a basis for using a controlled system model (30) of the process (12) to simulate what state trajectory the at least one peripheral component (14, 16) runs through within the downtime (T) for a predetermined stationary control output (Ustat), and a check is carried out (S12) in order to determine whether the state trajectory is solely within a range of permissible operating states (X), and the update is possibly started.

**2.** Method according to Claim 1, wherein, in order to start the update, the stationary control output (Ustat) is output (S18) to the at least one peripheral component (14, 16) and, in the meantime, the control apparatus (22) is decoupled and the update is initiated (S20) during interruption-free operation of the process (12).

**3.** Method according to one of the preceding claims, wherein a takeover signal for outputting further control outputs (U) is emitted to a further control apparatus (20) after the update has been started and within the downtime (T).

**4.** Method according to one of the preceding claims, wherein the controlled system model (30) has a model of a controlled system (32) comprising the at least one peripheral component (14, 16).

**5.** Method according to one of the preceding claims, wherein, in order to check the state trajectory by means of the simulation (44), a time at which the state trajectory comprises an impermissible operating state for the first time is determined and this time is used to determine a maximum permissible time horizon, and a check is carried out in order to determine whether the downtime (T) is less than the time horizon or less than the time horizon minus a predetermined buffer time.

**6.** Method according to one of the preceding claims, wherein, if the state trajectory is at least partially outside the range of permissible operating states within the downtime (T), a further state trajectory is respectively determined for at least one further predetermined stationary control output.

**7.** Method according to one of the preceding claims, wherein the update is delayed if there is no permissible state trajectory.

**8.** Method according to one of the preceding claims, wherein a predetermined safety control output which controls the at least one peripheral component (14, 16) into a predetermined safe operating state is provided, and the safety control output is output to the at least one peripheral component (14, 16) if an error state is signaled in the control apparatus (20, 22) and/or the at least one peripheral component (14, 16) after the update has been started.

**9.** Method according to one of the preceding claims, wherein the control apparatus (22) is coupled to the at least one peripheral component (14, 16) again after the update, and restart values which a) correspond to the stationary control output (Ustat) or b) are determined using the state trajectory are output (S22) by the control apparatus (22) as the first control output after coupling.

**10.** Method according to one of Claims 1 to 8, wherein the control apparatus (22) is coupled to the at least one peripheral component (14, 16) again after the update, and restart values which are determined by means of synchronization with a further control apparatus (20) which was coupled to the at least one peripheral component (14, 16) during the update are output (S22) by the control apparatus (22) as the first control output (U') after coupling.

**EP 3 120 202 B1**

**11.** Control apparatus (20, 22) for a process automation installation, wherein the control apparatus (20, 22) is designed to carry out a method according to one of the preceding claims.

**12.** Control apparatus (20, 22) according to Claim 11, which is in the form of a programmable logic controller, PLC.

**13.** Process automation installation (10) having at least one peripheral component (14, 16) for carrying out the process (12) and having a control apparatus (22) according to Claim 11 or 12.

**14.** Process automation installation (10) according to Claim 13, wherein the automation installation (10) has at least one further control apparatus (20) in addition to the control apparatus (22), wherein all control apparatuses (20, 22) are coupled via a synchronization connection (24) for the purpose of synchronizing regulator states.


**Revendications**

**1.** Procédé pour déterminer un moment de lancement d'une mise à jour d'un dispositif de commande (22), qui commande dans une installation d'automatisation (10) de processus au moins un composant périphérique (14, 16) en produisant des sorties de commande(U'), dans lequel au moins un temps mort (T) prédéterminé est nécessaire pour la mise à jour et dans lequel, lors du procédé, un état d'exploitation instantané du au moins un composant périphérique (14, 16) est détecté,
**caractérisé en ce que**
en se basant sur l'état d'exploitation détecté, il est simulé, au moyen d'un modèle de système asservi (30) du processus (12), quelle trajectoire d'état le au moins un composant périphérique (14, 16) exécute pendant le temps mort (T) avec une sortie de commande stationnaire (Ustat) prédéterminée, et il est vérifié (S12) si la trajectoire d'état est située exclusivement dans une plage d'états d'exploitation admissibles (X), et le cas échéant, la mise à jour est démarrée.

**2.** Procédé selon la revendication 1, dans lequel, pour démarrer la mise à jour, la sortie de commande stationnaire (Ustat) est délivrée (S18) à au moins un composant périphérique (14, 16) et dans le même temps, lors d'une exploitation sans interruption du processus (12), le dispositif de commande (22) est découplé et la mise à jour est lancée (S20).

**3.** Procédé selon l'une quelconque des revendications précédentes, dans lequel, après le démarrage de la mise à jour et pendant le temps mort (T), un signal de transfert pour délivrer d'autres sorties de commande (U) est envoyé à un autre dispositif de commande (20).

**4.** Procédé selon l'une quelconque des revendications précédentes, dans lequel le modèle de système asservi (30) comprend un modèle d'un système asservi (32) comprenant un des au moins un composant(s) périphérique(s) (14, 16).

**5.** Procédé selon l'une quelconque des revendications précédentes, dans lequel, pour vérifier la trajectoire d'état au moyen de la simulation (44), le moment où la trajectoire d'état comprend pour la première fois un état d'exploitation inadmissible est déterminé, et à partir de là, un horizon de temps maximal admissible est déterminé et il est vérifié si le temps mort (T) est inférieur à l'horizon de temps ou inférieur à l'horizon de temps moins une marge de temps prédéterminée.

**6.** Procédé selon l'une quelconque des revendications précédentes, dans lequel, dans le cas où la trajectoire d'état pendant le temps mort (T) est au moins en partie en dehors de la plage des états d'exploitation admissibles, il est déterminé pour au moins une autre sortie de commande stationnaire prédéterminée une autre trajectoire d'état respective.

**7.** Procédé selon l'une quelconque des revendications précédentes, dans lequel, dans le cas où aucune trajectoire d'état n'est admissible, la mise à jour est retardée.

**8.** Procédé selon l'une quelconque des revendications précédentes, dans lequel une sortie de commande de sécurité prédéterminée est mise à disposition, laquelle commande le au moins un composant périphérique (14, 16) dans un état d'exploitation de sécurité prédéterminé, et la sortie de commande de sécurité est délivrée à au moins un composant périphérique (14, 16) dans le cas où, après le démarrage de la mise à jour, un état de défaut est signalé au dispositif de commande (20, 22) et/ou à au moins un composant périphérique (14, 16).

9.  Procédé selon l'une quelconque des revendications précédentes, dans lequel, après la mise à jour, le dispositif de commande (22) est à nouveau couplé à l'au moins un composant périphérique (14, 16) et des valeurs de redémarrage sont délivrées (S22), à titre de première sortie de commande après le couplage du dispositif de commande (22), lesquelles valeurs de redémarrage

    a) correspondent à la sortie de commande stationnaire (Ustat) ou
    b) sont déterminées en se basant sur la trajectoire d'état.

10. Procédé selon l'une quelconque des revendications 1 à 8, dans lequel, après la mise à jour, le dispositif de commande (22) est à nouveau couplé à l'au moins un composant périphérique (14, 16) et des valeurs de redémarrage sont délivrées à titre de première sortie de commande (U') après le couplage du dispositif de commande (22), lesquelles valeurs de redémarrage sont déterminées par une synchronisation avec un autre dispositif de commande (20) qui était couplé pendant la mise à jour à l'au moins un composant périphérique (14, 16).

11. Dispositif de commande (20, 22) pour une installation d'automatisation de processus, ledit dispositif de commande (20, 22) étant conçu pour exécuter un procédé selon l'une des revendications précédentes.

12. Dispositif de commande (20, 22) selon la revendication 11, qui est conçu sous forme d'automate programmable (SPS).

13. Installation d'automatisation de processus (10) comprenant au moins un composant périphérique (14, 16) pour exécuter un processus (12) et un dispositif de commande (22) selon la revendication 11 ou 12.

14. Installation d'automatisation de processus (10) selon la revendication 13, ladite installation d'automatisation de processus (10) comprenant en plus du dispositif de commande (22) au moins un autre dispositif de commande (20), et dans laquelle tous les dispositifs de commande (20, 22) sont couplés par une liaison de synchronisation (24) pour synchroniser les états de régulation.

FIG 1

EP 3 120 202 B1

FIG 2

EP 3 120 202 B1

FIG 3

FIG 4

EP 3 120 202 B1

**IN DER BESCHREIBUNG AUFGEFÜHRTE DOKUMENTE**

**In der Beschreibung aufgeführte Patentdokumente**

- EP 2680529 A1